# EUROPÄISCHE PATENTSCHRIFT

(11) **EP 2 713 130 B1**
(45) Veröffentlichungstag und Bekanntmachung des Hinweises auf die Patenterteilung: **24.07.2019**
(21) Anmeldenummer: 13184423.5
(22) Anmeldetag: 13.09.2013
(51) Int. Cl.: F28D 1/047, F28D 20/02

(54) **Thermischer Speicher für Kälteanlagen**
Thermal storage device for refrigeration systems
Accumulateur thermique pour installations de refroidissement

(30) Priorität: 27.09.2012 DE 202012103717 U
(43) Veröffentlichungstag der Anmeldung: 02.04.2014
(73) Patentinhaber: Viessmann Kühlsysteme GmbH, 95030 Hof (DE)
(72) Erfinder: Gebelein, Bernd, 95179 Geroldsgrün (DE); Römer, Dr. Ing., Siegfried, 01477 Arnsdorf (DE)
(74) Vertreter: Pröll, Jürgen

(56) Entgegenhaltungen:
- WO-A2-2011/064749
- DE-A1-102005 039 672
- DE-A1-102007 022 718
- GB-A- 2 489 011

## Beschreibung

Die vorliegende Erfindung betrifft einen thermischen Speicher, mit dessen Hilfe der Zeitpunkt der Erzeugung von Kälte vom Zeitpunkt der Nutzung von Kälte zur Kühlung entkoppelbar ist. DE 10 2007 022718 A1 offenbart einen thermischen Speicher mit den Merkmalen im Oberbegriff des Patentanspruchs 1.

Aus dem Stand der Technik sind Kältegeräte, wie z. B. Kühlschränke und dergleichen, bekannt, bei welchen ein Phasenwechselmaterial ("phase change material" - PCM) zum Kühlen eines Kühlmittels oder zur direkten Wärmeaufnahme aus einem zu kühlenden Raum verwendet wird. So wird beispielsweise in der WO 2012/059332 A2 ein Kältegerät mit einem Pufferspeicher beschrieben, wobei das Kältegerät eine Kältemaschine, einen durch die Kältemaschine gekühlten, ein Speicherfluid enthaltenden Pufferspeicher und wenigstens eine erste Lagerkammer und erste Mittel zum Umwälzen des Speicherfluids zwischen dem Pufferspeicher und der ersten Lagerkammer aufweist. Ferner ist darin vorgesehen, dass wenigstens ein Phasenwechselmaterial in thermischem Kontakt mit dem Pufferspeicher steht. Das Phasenwechselmaterial bildet dabei einen Teil der Wandung des Pufferspeichers oder ist in der Wand des Pufferspeichers angeordnet. In dem Pufferspeicher ist das Speicherfluid aufgenommen, welches über eine Pumpe zu einem Wärmetauscher transportiert wird.

Die darin beschriebene Einrichtung ermöglicht aufgrund der konstruktiven Ausgestaltung nur eine geringe Speicherung bzw. weist eine geringe Speicherkapazität auf, wobei das PCM-Material lediglich in der Wand des Pufferspeichers angeordnet ist.

WO 2011/064749 A2 offenbart einen thermischen Speicher, wobei ein Wärmeträgerfluid über eine Solaranlage erhitzt, dann in einen ersten Speicher verbracht und von dem ersten Speicher über eine Wärmetauschereinrichtung einem zweiten Speicher zugeführt wird. Von dem zweiten Speicher kann das Wärmeträgerfluid wieder der Solaranlage zum Erwärmen des Wärmeträgerfluids zugeführt werden. Die Wärmetauschereinrichtung ist stets getrennt von den Speichern angeordnet. In der Wärmetauschereinrichtung wird thermische Energie des Wärmeträgerfluids auf ein zweites Fluid zur Energieerzeugung übertragen. In bevorzugten Ausführungsformen sind die Speicher sogenannte Erdspeicher, welche schräg verlaufende Seitenwände aufweisen. Diese Ausgestaltung ergibt sich durch das Ausheben der Speicher oder der natürlichen Ausgestaltung der dafür verwendeten Gruben.

US 2002/0179298 A1 offenbart einen thermischen Speicher, welcher als so genannter Erdspeicher ausgebildet ist. In einer als Speicher ausgebildeten Grube ist eine Speicherflüssigkeit (Wasser) aufgenommen, welche über Rohre zu- und abgepumpt werden kann. Je nachdem, ob warmes Wasser oder kaltes Wasser benötigt wird, wird entweder das Wasser im oberen Bereich oder Wasser im unteren Bereich abgepumpt und einem Wärmetauscher zugeführt. Die Seitenwände des Speichers sind schräg ausgebildet, so dass die Seitenwände nicht gegen das den Speicher umgebende Erdreich abgestützt werden müssen.

DE 20 2010 015 153 U1 offenbart eine Wärmetauschereinrichtung. Die Wärmetauschereinrichtung kann zylindrisch oder kegelförmig ausgebildet sein, wobei ein Fluid durch die Wärmetauschereinrichtung, in welcher ein zweites Fluid aufgenommen ist, über ein Rohr geführt wird. Dadurch erfolgt ein Wärmeaustausch zwischen dem Fluid in dem Rohr und dem das Rohr umgebende, in der Wärmetauschereinrichtung aufgenommene zweite Fluid. In einer Ausführungsform kann die Wärmetauschereinrichtung durch zwei gekreuzte U-förmige Rohre gebildet sein. Die in DE 20 2010 015 153 U1 offenbarten Wärmetauschereinrichtungen können sowohl liegend als auch stehend verwendet werden.

DE 20 2006 012 871 U1 offenbart einen Wasser-/Eisspeicher mit vertikal in einem Speicher verlaufenden Wärmetauschermatten, in welchen ein erstes Fluid aufgenommen ist. Der Speicher ist mit einem zweiten Fluid gefüllt, wobei ein Wärmeübergang von dem ersten zu dem zweiten Fluid erfolgt.

DE 10 2011 015 530 A1 offenbart einen Schichtenspeicher zur Speicherung von Wärmeenergie. Der Schichtenspeicher weist zwei Rohrwendeln auf, wobei eine erste Rohrwendel am Boden des zylindrischen Schichtenspeichers und eine zweite Rohrwendel an der Decke des zylindrischen Schichtenspeichers angeordnet sind. Der Schichtenspeicher ist dazu ausgebildet, eine Flüssigkeit zu erhitzen, wobei Trennelemente mit Öffnungen in dem Schichtenspeicher vorgesehen sind, durch welche ein heißes Fluid nach oben steigen kann.

DE 102 32 700 B4 offenbart einen "Aqua-Re-Energie-Trichter", der in der Trichterwand Kältemittel führende Leitungen aufweist und in den ein Fluid eingebracht und darin verwirbelt wird. Am unteren Ende des Trichters ist eine Öffnung vorgesehen. Über die Öffnung kann das Fluid aus dem Trichter abgeführt werden.

DE 10 2007 022 718 A1 offenbart einen Kälte- und/oder Wärmespeicher, wobei ein erster Wärmetauscher und ein zweiter Wärmetauscher serpentinenartig ausgebildet sind und die serpentinenartigen Abschnitte der Wärmetauscher Trägerelemente umgeben, in welchen Wasser aufgenommen ist. Um Korrosionsvorgänge zu verhindern bestehen die Wärmetauscher, die Trägerelemente und Hüllen der Trä gerelemente aus Aluminium. Zudem wird hierdurch ein guter Wärmeübergang erreicht.

GB 2 489 011 A offenbart einen Wärmespeicher mit auswechselbaren Wärmespeicher-Kartuschen. Der Wärmespeicher weist einen Aufnahmeraum für die Kartuschen auf. Zusätzlich verlaufen Leitungsabschnitte eines ersten Leitungssystems und eines zweiten Leitungssystems durch den Aufnahmeraum. Über die Leitungsabschnitte erfolgt eine Wärmeübertragung zwischen einem Fluid und den Kartuschen.

DE 10 2005 039 672 A1 offenbart einen Wärmespeicher, der quaderförmige Metallschaumkörper aufweist. In dem Metallschaumkörper sind Wärmetauscher angeordnet, die als Flach-Metallrohre ausgebildet sind. Zwischen jeweils zwei benachbarten Platten liegen Abschnitte der Metallrohre der beiden Wärmetauscher. Die Rohre der Wärmetauscher weisen gemeinsame Zu- und Abführleitungen auf.

Aufgabe der vorliegenden Erfindung ist es, einen hochdynamischen, aktiv regelbaren thermischen Speicher mit definierter Phasengrenze zwischen fester und flüssiger Phase des Phasenwechselmaterials anzugeben, welcher zusätzlich eine höhere Speicherkapazität gegenüber bekannten Vorrichtungen aus dem Stand der Technik aufweist und darüber hinaus auch für größere Anlagen eingesetzt werden kann.

Die Aufgabe wird durch einen thermischen Speicher mit den in Anspruch 1 angegebenen Merkmalen gelöst. Vorteilhafte Weiterbildungen sind in den Unteransprüchen im Detail angegeben.

Die Erfindung lässt sich besonders wirtschaftlich realisieren in Verbindung mit thermischen Speichern, die eine Speicherkapazität von ≥4 kWh aufweisen. Die Speicherkapazität nach oben ist nicht begrenzt. Speicher mit einer Kapazität von 50 kWh und mehr können ebenfalls zur Anwendung kommen.

Der erfindungsgemäße thermische Speicher weist im Inneren einen Raum auf, in welchem ein Speichermedium zur Zwischenspeicherung thermischer Energie eingebracht ist. Ferner enthält der Raum ein primäres Leitungssystem, welches über Anschlüsse zum Zu- und Abführen eines primären Kühlmittels verfügt und mit einer Kältemaschine zum Laden des thermischen Speichers verbunden werden kann, sowie ein sekundäres Leitungssystem, welches über Anschlüsse zur Zu- und Abfuhr eines sekundären Kühlmittels verfügt und mit einem Kälteverbraucher, beispielsweise einem Verdampfer in einem begehbaren Kühlraum, zum Entladen des thermischen Speichers verbunden werden kann. Der Raum weist von seinem Boden nach oben zu einem oberen Ende des Raums eine sich vergrößernde Querschnittsinnenfläche auf und das primäre Leitungssystem sowie das sekundäre Leitungssystem weisen jeweils eine Vielzahl von sich in Ebenen mit verschiedenen Querschnitten parallel zu dem Boden des Raums verlaufende Leitungsabschnitte auf, die in den Raum aufgenommen sind, wobei die Leitungsabschnitte voneinander unabhängig ausgebildet und an ihren oberen Enden im Bereich des oberen Endes des Raums mit mindestens einer Vorrichtung zur Regelung der Durchströmung der Abschnitte mit Kühlmittel verbunden sind.

Bei einem derartigen thermischen Speicher kann der Zeitpunkt der Erzeugung von Kälte vom Zeitpunkt der Nutzung der Kälte entkoppelt werden, wodurch die Anlageneffizienz beispielsweise durch Nutzung niedriger Rückkühltemperaturen und verlängerter Verdichterlaufzeiten erheblich gesteigert werden kann. Ferner können Kostenvorteile durch Nutzung günstiger Stromtarife bzw. durch Lastverschiebung und somit Begrenzung von Spitzenlasten erreicht werden.

Das primäre Kühlmittel durchströmt dann die Leitungsabschnitte des primären Leitungssystems und kühlt damit das in dem Raum des thermischen Speichers aufgenommene Speichermedium. Dadurch, dass die einzelnen Leitungsabschnitte unabhängig voneinander ausgebildet sind, ist es auch möglich, das primäre Kühlmittel den einzelnen Leitungsabschnitten getrennt voneinander zuzuführen, so dass ein definiertes Kühlen des Speichermediums bei optimalen Wärmeübergängen und somit bei hoher Dynamik erfolgen kann.

Ferner ist es bei dem thermischen Speicher möglich, einen definierten Verlauf der Phasengrenze zwischen den Phasen fest und flüssig einzustellen und vorzugeben. Die feste Phase des Speichermediums befindet sich stets im bodennahen Bereich des Raums, die flüssige Phase über der festen Phase und ein Inertgasvolumen befindet sich im oberen Bereich des Raums. Der Raum des thermischen Speichers ist hermetisch abgedichtet, so dass das Speichermedium nicht aus dem Raum austreten kann und der Phasenwechsel des Speichermediums in dem Raum durch die Zufuhr des primären Kühlmittels bzw. des sekundären Kühlmittels erfolgt, wodurch die thermodynamischen Zustände (Druck, Temperatur, Volumen, etc.) geändert werden.

Darüber hinaus ist den einzelnen Leitungsabschnitten des primären Leitungssystems in den jeweiligen Ebenen über eine Vorrichtung schrittweise das primäre Kühlmittel von unten nach oben zum Kühlen des Speichermediums zuführbar. Die Vorrichtung ist dabei so ausgebildet, dass das primäre Kühlmittel zuerst dem Leitungsabschnitt zugeführt wird, welcher in der Nähe des Bodens des Raums verläuft und anschließend den nächsten, weiter vom Boden entfernt liegenden Leitungsabschnitten zugeführt wird. Dadurch wird das Einstellen einer bestimmten Erstarrungsfront (Übergang von flüssiger zu fester Phase des Phasenwechselmaterials) erreicht, was bei einem Phasenwechsel aufgrund einer gleichzeitigen Kühlung in verschiedenen Bereichen eines thermischen Speichers nicht möglich ist.

In dem Raum ist ferner ein sekundäres Leitungssystem angeordnet, wobei das sekundäre Leitungssystem zum Entladen des thermischen Speichers genutzt werden kann und in diesem ein sekundäres Kühlmittel geführt wird. Das sekundäre Kühlmittel durchläuft damit ebenso das Speichermedium und gibt an das Speichermedium Wärme ab; und dadurch kann beispielsweise ein begehbarer Kühlraum gekühlt werden. Das Kühlmittel wird über eine Pumpe oder eine andere Vorrichtung in dem sekundären Leitungssystem umgewälzt. In dem Verdampfer kann das sekundäre Kühlmittel sodann verdampfen, um beispielsweise einen Kühlraum zu kühlen. Anschließend wird das sekundäre Kühlmittel wieder zurück zu dem thermischen Speicher geführt, in welchem das sekundäre Kühlmittel über das sekundäre Leitungssystem, welches durch den Raum des thermischen Speichers und durch das Speichermedium geführt ist, wieder gekühlt wird.

Weiterhin kann das sekundäre Leitungssystem eine Vielzahl von Leitungsabschnitten aufweisen, die voneinander unabhängig ausgebildet und an ihren oberen Enden im Bereich des oberen Endes des Raums mit einer weiteren Vorrichtung verbunden sind, über die den Leitungsabschnitten des se kundären Leitungssystems das sekundäre Kühlmittel zuführbar ist. Dadurch ergibt sich ein ähnlicher Wärmeübergang wie bei den Leitungsabschnitten des primären Leitungssystems. Auch kann über die weitere Vorrichtung den einzelnen Leitungsabschnitten des sekundären Leitungssystems definiert das sekundäre Kühlmittel zugeführt werden.

Dabei kann den einzelnen Leitungsabschnitten des sekundären Leitungssystems über die weitere Vorrichtung schrittweise das sekundäre Kühlmittel von oben nach unten zuführbar sein. Die weitere Vorrichtung ist so ausgebildet, dass das sekundäre Kühlmittel zuerst den Leitungsabschnitten des sekundären Leitungssystems zugeführt wird, welche sich in dem oberen Bereich des Raums befinden und anschließend erst den weiteren darunter gelegenen Leitungsabschnitten.

Durch die Leitungsführung des primären und sekundären Leitungssystems im thermischen Speicher sowie die Regelung der Durchströmung der Leitungsabschnitte in den einzelnen ansteuerbaren Ebenen mit Kühlmittel wird eine horizontal verlaufende Schmelz- bzw. Erstarrungsfront innerhalb des Speichermediums ausgebildet. Durch die Vielzahl einzeln ansteuerbarer Ebenen wird ein hochdynamischer Speicher realisiert, da optimale Wärmeübergänge zwischen Phasenwechselmaterial und den Leitungssystemen zum Laden und Entladen des thermischen Speichers bereitgestellt werden.

Die Leitungsabschnitte des primären Leitungssystems der jeweiligen Ebenen und/oder die Leitungsabschnitte des sekundären Leitungssystems können dabei wendelförmig bzw. mäanderförmig und/oder an die Querschnittsänderungen des Raums angepasst ausgebildet sein. Eine wendelförmige bzw. mäanderförmige Ausgestaltung bietet eine große Fläche für einen Wärmeübergang in der jeweiligen Ebene, so dass die jeweiligen Leitungsabschnitte eine größere Fläche für den Wärmeübergang zum Kühlen des Kühlmittels bzw. der Kühlmittel aufweisen.

Die Leitungsabschnitte des primären und des sekundären Leitungssystems können in dem Raum im Wesentlichen aneinander verlaufen und die Strömungsrichtung des primären Kühlmittels und die Strömungsrichtung des sekundären Kühlmittels können so eingestellt sein, dass die Strömungsrichtung des primären Kühlmittels entgegen der Strömungsrichtung des sekundären Kühlmittels verläuft. Bei einem so genannten Gegenstromprinzip erfolgt ein schnelleres Abkühlen. Ferner kann durch das gezielte Durchströmen einzelner Leitungsabschnitte mittels der Vorrichtungen im primären und sekundären Leitungssystem sowie die gegenläufigen Strömungsrichtungen eine definierte Phasengrenze im Speichermedium eingestellt werden.

In den jeweiligen Leitungssystemen können Pumpen zum Transport des primären und/oder sekundären Kühlmittels angeordnet sein. Jedoch ist es auch möglich, alternative Vorrichtungen zum Zuführen und Umwälzen der Kühlmittel vorzusehen.

Das Speichermedium kann ein Phasenwechselmaterial sein. Ferner kann das Phasenwechselmaterial ein Gemisch aus Wasser und Salzen oder Alkoholen mit oder ohne weiteren Zusätzen sein.

In weiteren Ausgestaltungen ist vorgesehen, dass das Phasenwechselmaterial ein Gemisch aus Wasser und Salzen oder Alkoholen ist, dessen Gemischzusammensetzung und/oder Gemischkonzentration veränderbar und/oder einstellbar ist. Dies kann über weitere Mittel oder Einrichtungen erfolgen. Zum Beispiel können in/an dem thermischen Speicher weitere Anschlüsse vorgesehen sein, über die das Speichermedium ausgetauscht werden kann. In einer Kühleinrichtung mit einem derartigen thermischen Speicher bzw. bei einem derartigen thermischen Speicher können auch mit verschiedenen Speichermedien gefüllte Vorratsbehälter angeordnet sein. Aus den Vorratsbehältern kann dann ein bestimmtes Speichermedium in den Raum geführt werden.

Bei der Verwendung einer wässrigen Lösung von Salzen oder Alkoholen als Phasenwechselmaterial wird durch unterschiedlich sich ergebende Gemischkonzentrationen aufgrund thermodynamischer Zustände im Speicher die natürliche Osmose angeregt, die zu einer Strömung und Verteilung in flüssigen Regionen des Phasenwechselmaterials führt. Darüber hinaus lässt sich durch geeignete Wahl der Gemischzusammensetzungen bzw. Gemischkonzentrationen die Phasenwechseltemperatur dem (Kühl-)Bedarf entsprechend konfigurieren bzw. anpassen.

Die sich vom Boden zur Decke erweiternden Querschnittsflächen des Raumes können auch stufenförmig ausgebildet sein und/oder in jeder dadurch gebildeten Ebene können Leitungsabschnitte der primären und sekundären Leitungssysteme verlaufen.

Weitere Ziele, Merkmale, Vorteile und Anwendungsmöglichkeiten ergeben sich aus der nachfolgenden Beschreibung von nicht einschränkend zu verstehenden Ausführungsbeispielen mit Bezug auf die zugehörigen Zeichnungen. Dabei bilden alle beschriebenen und/oder bildlich dargestellten Merkmale für sich oder in beliebiger Kombination den hier offenbarten Gegenstand, auch unabhängig von ihrer Gruppierung in den Ansprüchen oder deren Rückbeziehungen. Die Abmessungen und Proportionen der in den Figuren dargestellten Komponenten sind hierbei nicht unbedingt maßstäblich; sie können bei zu implementierenden Ausführungsformen vom Veranschaulichten abweichen.

In den Zeichnungen zeigen:
- Fig. 1: eine isometrische Ansicht eines thermischen Speichers;
- Fig. 2: eine Draufsicht auf einen thermischen Speicher;
- Fig. 3: einen Schnitt durch den in Fig. 2 gezeigten thermischen Speicher; und
- Fig. 4: eine schematische Ansicht der einzelnen Phasen eines Speichermediums in dem Raum eines thermischen Speichers.

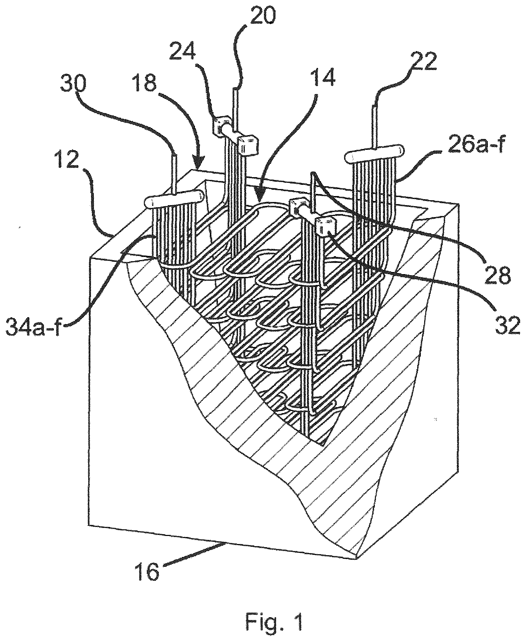

Fig. 1 zeigt eine isometrische Ansicht eines thermischen Speichers 12. Der Raum 14 im Inneren des thermischen Speichers 12 ist an seinem oberen Ende 18 geschlossen und hermetisch abgedichtet. In Fig. 1 ist der Raum 14 jedoch offen dargestellt, wobei diese Darstellung lediglich zur Vereinfachung und zur Veranschaulichung der darin aufgenommenen Komponenten dient.

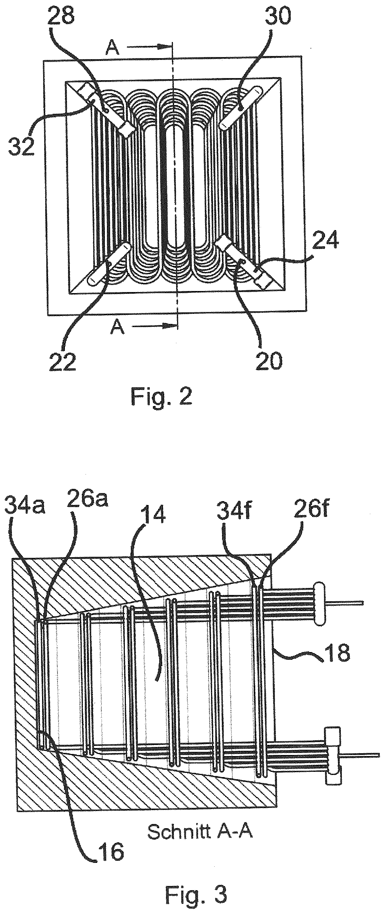

In dem Raum 14 ist ein primäres Leitungssystem mit einem Einlass 20 und einem Auslass 22 aufgenommen, das aus einer Vielzahl von Leitungsabschnitten 26 a bis f besteht, die parallel und beabstandet zu dem Boden 16 des Raums 14 verlaufen und angeordnet sind. Die Leitungsabschnitte 26 a bis f (siehe Fig. 2) sind jeweils mit einer Vorrichtung 24 verbunden. In dem Raum 14 ist ein vom primären Leitungssystem getrenntes sekundäres Leitungssystem ebenfalls mit einem Einlass 28 und einem Auslass 30 aufgenommen, das aus einer Vielzahl von Leitungsabschnitten 34 a bis f besteht, die parallel und beabstandet zu dem Boden 16 des Raums 14 verlaufen und angeordnet sind. Das primäre Kühlmittel wird über eine Vorrichtung 24 auf die einzelnen Leitungsabschnitte 26 a bis f verteilt. Das sekundäre Kühlmittel wird über eine Vorrichtung 32 auf die Leitungsabschnitte 34 a bis f des sekundären Leitungssystems verteilt.

Das primäre Kühlmittel wird von einer Kältemaschine gekühlt, wobei die Kühlung des primären Kühlmittels durch verschiedene bekannte Vorrichtungen bewerkstelligt werden kann. Über eine Pumpe oder andere Umwälzmittel wird das primäre Kühlmittel zu dem Einlass 20 transportiert.

Über den Einlass 20 wird das primäre Kühlmittel der Vorrichtung 24 zugeführt, welche das primäre Kühlmittel den Leitungsabschnitten 26 a bis f zuführt. Das primäre Kühlmittel durchströmt die von der Vorrichtung 24 ausgewählten Leitungsabschnitte 26 a bis f und wird dann über den Auslass 22 wieder abgeführt.

Die Vorrichtung 24 steuert dabei die Zufuhr des primären Kühlmittels zu den jeweiligen Leitungsabschnitten 26 a bis f entsprechend vorher festgelegter Regeln, wobei das primäre Kühlmittel stets zuerst dem Leitungsabschnitt 26 a und dann den weiteren Leitungsabschnitten 26 b bis f zugeführt wird. Die Zuführung erfolgt dabei stufenweise.

Über den Einlass 28 wird das sekundäre Kühlmittel der Vorrichtung 32 zugeführt, welche das sekundäre Kühlmittel den Leitungsabschnitten 34 a bis f zuführt. Das sekundäre Kühlmittel durchströmt die von der Vorrichtung 32 ausgewählten Leitungsabschnitte 34 a bis f und wird dann über den Auslass 30 wieder abgeführt.

Die Vorrichtung 32 steuert dabei die Zufuhr des sekundären Kühlmittels zu den jeweiligen Leitungsabschnitten 34 a bis f entsprechend vorher festgelegter Regeln, wobei das sekundäre Kühlmittel stets zuerst dem Leitungsabschnitt 34 f und dann den weiteren Leitungsabschnitten 34 e bis a zugeführt wird. Die Zuführung erfolgt dabei stufenweise.

Wie den Figuren zu entnehmen ist, weist der thermische Speicher 12 eine sich vom Boden 16 aus nach oben erweiternde Querschnittsfläche des Raums 14 auf. Der sich vergrößernde Querschnitt dient zur Bereitstellung einer "Vorzugs-Schmelz/Erstarrungs-Richtung" für das in dem Raum 14 aufgenommene Speichermedium. Das Speichermedium ist ein Phasenwechselmaterial, wodurch eine hohe Speicherdichte erreicht werden kann.

Fig. 2 zeigt eine Draufsicht auf einen thermischen Speicher 12, wobei der wendelförmige oder mäanderförmige Verlauf der Leitungsabschnitte 26 a bis f des primären Leitungssystems sowie der Leistungsabschnitte 34 a bis f des sekundären Leitungssystems in den Ebenen dargestellt ist. Der Verlauf der Leitungsabschnitte im primären und sekundären Leitungssystem stellt eine große Wärmeübertragungsfläche bereit.

Fig. 3 zeigt einen Schnitt durch den thermischen Speicher 12 von Fig. 2. In Fig. 3 ist dargestellt, wie die einzelnen Leitungsabschnitte 26 a bis f des primären Leitungssystems sowie die Leitungsabschnitte 34 a bis f des sekundären Leitungssystems an die Querschnittsänderungen des Raums 14 angepasst sind. Über das primäre Leitungssystem wird das in dem Raum 14 befindliche Phasenwechselmaterial mittels des primären Kühlmittels gekühlt und somit auf eine bestimmte Temperatur gebracht, wobei ein Phasenwechsel stattfindet.

Wenn eine Kühleinrichtung mit einem thermischen Speicher 12 betrieben wird, wird zuerst über das primäre Leitungssystem das in dem Raum 14 aufgenommene Phasenwechselmaterial gekühlt. Das primäre Kühlmittel durchströmt die Vorrichtung 24 und die von dieser freigegebenen Leitungsabschnitte 26 a bis f und strömt dann zurück zu der Kältemaschine, in welcher das primäre Kühlmittel wieder entsprechend gekühlt wird. Durch das Kühlen aufgrund der Durchströmung des primären Leitungsabschnittes 26 a findet ein Phasenwechsel des Phasenwechselmaterials in dem Raum 14 zuerst im bodennahen Bereich statt (bzw. gefriert das Phasenwechselmaterial zuerst im bodennahen Bereich). Dadurch stellt sich am Boden 16 des Raums 14 eine feste Phase ein, darüber eine flüssige und ganz oben befindet sich im Bereich des oberen Endes 18 des Raums 14 ein Inertgasreservoir. Über die Vorrichtung 24 wird das primäre Kühlmittel sodann schrittweise den weiteren Leitungsabschnitten 26 b bis f zugeführt, so dass das Phasenwechselmaterial in dem Raum 14 vom Boden 16 des Raums 14 ausgehend stetig nach oben "gefriert", indem ein Phasenwechsel stattfindet. Das Zuführen des primären Kühlmittels erfolgt dabei solange, bis der gesamte thermische Speicher 12 geladen ist. Vollständig geladen bedeutet in diesem Zusammenhang, dass das gesamte Phasenwechselmaterial in der festen Phase vorliegt.

Zum Kühlen beispielsweise eines Kühlraums wird über das sekundäre Leitungssystem ein sekundäres Kühlmittel in den Raum 14 geführt, wobei über die Vorrichtung 32 das sekundäre Kühlmittel zuerst durch die Leitungsabschnitte 34 f des sekundären Leitungssystems geführt wird, welche sich im oberen Bereich 18 des Raums 14 befinden. Dadurch beginnt das Phasenwechselmaterial zuerst im oberen Bereich 18 des Raums 14 zu "tauen" bzw. findet ein Phasenwechsel von fest zu flüssig statt. Anschließend werden dann die weiteren Leitungsabschnitte 34 e bis a des sekundären Leitungssystems mit dem sekundären Kühlmittel durchströmt. Dadurch, dass das sekundäre Kühlmittel zuerst nur in dem oberen Bereich 18 des Raums 14 die Leitungsabschnitte des sekundären Leitungssystems durchströmt, ergibt sich ein definiertes Schmelzen des Phasenwechselmaterials (definierter Phasenwechsel von fest zu flüssig) von "oben nach unten".

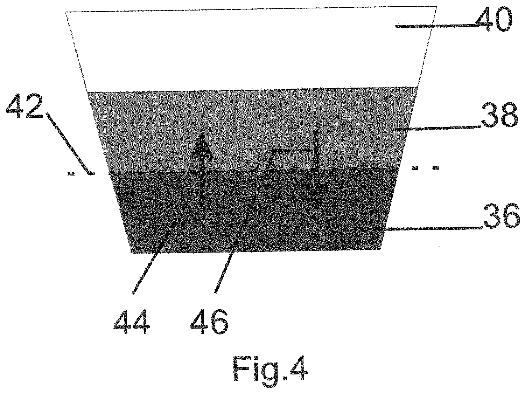

Figur 4 zeigt schematisch die Aufteilung der einzelnen Phasen des Phasenwechselmaterials in thermischen Speichern bei einem beliebig gewählten Zustand. Dabei liegt ein Teil des Phasenwechselmaterials in fester Phase 36 vor, welche sich im unteren Bereich in der Nähe des Bodens befindet. Darüber befindet sich die flüssige Phase 38 und über der flüssigen Phase 38 befindet sich ein Inertgasreservoir 40.

Durch die Reihenfolge der Durchströmung der Leitungsabschnitte des primären Leitungssystems von "unten nach oben" sowie der Leitungsabschnitte des sekundären Leitungssystems von "oben nach unten" erfolgt ein Phasenwechsel stets in definierter Richtung in der Art, dass die Erstarrungsfront 44 stets von "unten nach oben" und die Schmelzfront 46 stets von "oben nach unten" sich bewegen.

Ein derartiger thermischer Speicher kann beispielsweise zum Kühlen begehbarer Kühlräume verwendet werden. Darüber hinaus können noch weitere Mittel vorgesehen sein, über die beispielsweise die Gemischkonzentration oder Gemischzusammensetzung des Phasenwechselmaterials in der Ausführung veränderbar ist oder aber über welche das Phasenwechselmaterial austauschbar ist. Als geeignetes Phasenwechselmaterial können beispielsweise Gemische aus Wasser und Salzen oder Alkoholen verwendet werden.

### Bezugszeichenliste

- 12: thermischer Speicher
- 14: Raum
- 16: Boden
- 18: oberes Ende
- 20: primäres Leitungssystem Einlass
- 22: primäres Leitungssystem Auslass
- 24: Vorrichtung primäres Leitungssystem
- 26 a bis f: Leitungsabschnitte primäres Leitungssystem
- 28: sekundäres Leitungssystem Einlass
- 30: sekundäres Leitungssystem Auslass
- 32: Vorrichtung sekundäres Leitungssystem
- 34 a bis f: Leitungsabschnitte sekundäres Leitungssystem
- 36: feste Phase
- 38: flüssige Phase
- 40: Inertgasreservoir
- 42: Phasengrenze fest/flüssig
- 44: Richtung der Erstarrungsfront
- 46: Richtung der Schmelzfront

## Patentansprüche

1. Thermischer Speicher (12) mit dessen Hilfe der Zeitpunkt der Erzeugung von Kälte vom Zeitpunkt der Nutzung von Kälte zur Kühlung entkoppelbar ist, wobei der thermische Speicher (12) über ein primäres Leitungssystem (20; 22), welches mit einer Kälteerzeugungsanlage verbunden ist und in dem ein primäres Kühlmittel zirkuliert, geladen und über ein sekundäres Leistungssystem (28; 30), in dem ein sekundäres Kühlmittel zirkuliert, entladen wird, wobei der thermische Speicher (12) einen Raum (14) aufweist, in dem das primäre Leitungssystem und das sekundäre Leitungssystem angeordnet sind, wobei das primäre Leitungssystem und das sekundäre Leitungssystem in eine Vielzahl von sich in verschiedenen, parallel zum Boden des Raums sich erstreckenden Höhenebenen befindenden Leitungsabschnitten unterteilt sind, und wobei in dem Raum (14) des thermischen Speichers (12) ein Speichermedium aufgenommen ist, welches die Leitungsabschnitte des primären Leitungssystems (20; 22) und des sekundären Leitungssystems (28; 30) im Wesentlichen vollständig umgibt und zur Speicherung der thermischen Energie dient, **dadurch gekennzeichnet, dass** der Raum (14) von seinem Boden nach oben einen sich vergrössernden Quertschnitt aufweist; und dass den einzelnen Leitungsabschnitten des primären Leitungssystems in den jeweiligen Ebenen über eine Vorrichtung (24) schrittweise das primäre Kühlmittel von unten nach oben zum Kühlen des Speichermediums zuführbar ist.

2. Thermischer Speicher nach Anspruch 1, wobei den einzelnen Leitungsabschnitten des sekundären Leitungssystems in den jeweiligen Ebenen über eine Vorrichtung (32) schrittweise das sekundäre Kühlmittel von oben nach unten zum Entladen des Speichermediums zuführbar ist.

3. Thermischer Speicher nach Anspruch 2, wobei durch die Leitungsführung des primären und sekundären Leitungssystems (20, 22; 28,30) im thermischen Speicher sowie die Regelung der Durchströmung der Leitungsabschnitte in den einzelnen ansteuerbaren Ebenen mit den primären und sekundären Kühlmitteln eine horizontal verlaufende Schmelz- bzw. Erstarrungsfront innerhalb des Speichermediums einstellbar ist.

4. Thermischer Speicher nach einem der Ansprüche 1 bis 3, wobei die Leitungsabschnitte des primären Leitungssystems der jeweiligen Ebenen und/oder die Leitungsabschnitte des sekundären Leitungssystems wendelförmig und/oder mäanderförmig an die Querschnittsänderungen des Raums (14) angepasst ausgebildet sind.

5. Thermischer Speicher nach Anspruch 3 oder 4, wobei die Leitungsabschnitte des primären und des sekundären Leitungssystems in dem Raum im Wesentlichen aneinander verlaufen und die Strömungsrichtung des primären Kühlmittels und die Strömungsrichtung des sekundären Kühlmittels so eingestellt sind, dass die Strömungsrichtung des primären Kühlmittels entgegen der Strömungsrichtung des sekundären Kühlmittels läuft.

6. Thermischer Speicher nach einem der Ansprüche 1 bis 5, wobei das Speichermedium ein Phasenwechselmaterial ist.

7. Thermischer Speicher nach Anspruch 6, wobei das Phasenwechselmaterial ein Gemisch aus Wasser und Salzen oder Alkoholen mit oder ohne weiteren Zusätzen ist.

8. Thermischer Speicher nach Anspruch 7, wobei die Gemischzusammensetzung und/oder Gemischkonzentration des Phasenwechselmaterials veränderbar und einstellbar ist.

9. Thermischer Speicher nach einem der Ansprüche 1 bis 8, wobei die Querschnittsänderungen stufenförmig ausgebildet sind und/oder in jeder dadurch gebildeten Ebene Leitungsabschnitte des primären sowie des sekundären Leitungssystems verlaufen.

10. Thermischer Speicher nach Anspruch 6, **dadurch gekennzeichnet, dass** der thermische Speicher eine Speicherkapazität von ≥ 4kWh aufweist.

## Claims

1. Thermal storage device (12) by means of which the time of refrigeration can be uncoupled from the time of cold use for cooling, wherein the thermal storage device (12) is charged via a primary pipe system (20; 22) which is connected to a cold generation unit and in which a primary coolant circulates, and is discharged via a secondary pipe system (28; 30) in which a secondary coolant circulates, wherein the thermal storage device (12) has a space (14) in which the primary pipe system and the secondary pipe system are arranged, wherein the primary pipe system and the secondary pipe system are subdivided into a plurality of pipe sections located in different height levels extending parallel to the floor of the space, and wherein a storage medium is located in the space (14) of the thermal storage device (12), which storage medium substantially completely surrounds the pipe sections of the primary pipe system (20; 22) and the secondary pipe system (28; 30) and serves to store the thermal energy,
**characterized in that**
the space (14) has an increasing cross-section from its floor upwards; and that the primary coolant can be supplied stepwise from bottom to top in the single pipe sections of the primary pipe system in the respective planes via a device (24) for cooling the storage medium.

2. Thermal storage device according to claim 1,
wherein the single pipe sections of the secondary pipe system in the respective planes can be supplied step by step with the secondary coolant from top to bottom via a device (32) for discharging the storage medium.

3. Thermal storage device according to claim 2, wherein a horizontally extending melting or solidification front within the storage medium can be set by the pipe arrangement of the primary and secondary pipe system (20, 22; 28, 30) in the thermal storage device and can be set by the flow control of the pipe sections in the single controllable planes with the primary and secondary coolants.

4. Thermal storage device according to one of the claims 1 to 3, wherein the pipe sections of the primary pipe system of the respective planes and/or the pipe sections of the secondary pipe system are helically and/or meanderingly adapted to the cross-sectional changes of the space (14).

5. Thermal storage device according to claim 3 or 4, wherein the pipe sections of the primary and secondary pipe systems in the space are substantially contiguous, and the flow direction of the primary coolant and the flow direction of the secondary coolant are set such that the flow direction of the primary coolant is opposite to the flow direction of the secondary coolant.

6. Thermal storage device according to one of the claims 1 to 5, wherein the storage medium is a phase change material.

7. Thermal storage device according to claim 6, wherein the phase change material is a mixture of water and salts or alcohols with or without further additives.

8. Thermal storage device according to claim 7, wherein the mixture composition and/or mixture concentration of the phase change material is variable and adjustable.

9. Thermal storage device according to one of the claims 1 to 8, wherein the cross-sectional changes are in the form of steps and/or pipe sections of the primary and secondary pipe systems extend in each plane formed thereby.

10. Thermal storage device according to claim 6,
**characterized in that**
the thermal storage device has a storage capacity of ≥ 4 kWh.

## Revendications

1. Réservoir thermique (12) à l'aide duquel le moment de production de froid peut être découplé du moment d'utilisation du froid aux fins de refroidissement, dans lequel le réservoir thermique (12) est chargé par l'intermédiaire d'un système de conduites primaire (20 ; 22), lequel est relié à une installation de production de froid et dans lequel circule un réfrigérant primaire, et est déchargé par l'intermédiaire d'un système de conduites secondaire (28 ; 30) dans lequel circule un réfrigérant secondaire, dans lequel le réservoir thermique (12) présente une chambre (14) dans laquelle le système de conduites primaire et le système de conduites secondaire sont agencés, dans lequel le système de conduites primaire et le système de conduites secondaire sont divisés en une pluralité de parties de conduites situées dans différents plans en hauteur s'étendant parallèlement au fond de la chambre, et dans lequel un milieu d'accumulation, lequel entoure sensiblement entièrement les parties de conduites du système de conduites primaire (20 ; 22) et du système de conduites secondaire (28 ; 30) et sert à accumuler l'énergie thermique, est logé dans la chambre (14) du réservoir thermique (12), **caractérisé en ce que** la chambre (14) présente une section transversale augmentant de son fond vers le haut ; et **en ce que** le réfrigérant primaire peut être amené progressivement de bas en haut aux différentes parties de conduites du système de conduites primaire dans les plans respectifs par l'intermédiaire d'un dispositif (24), pour refroidir le milieu d'accumulation.

2. Réservoir thermique selon la revendication 1, dans lequel le réfrigérant secondaire peut être amené progressivement de haut en bas aux différentes parties de conduite du système de conduites secondaire dans les plans respectifs par l'intermédiaire d'un dispositif (32), pour décharger le milieu d'accumulation.

3. Réservoir thermique selon la revendication 2, dans lequel un front de fusion ou de solidification s'étendant horizontalement peut être réglé à l'intérieur du milieu d'accumulation par le guidage de conduites des systèmes de conduites primaire et secondaire (20, 22 ; 28, 30) dans le réservoir thermique ainsi que par la régulation de la traversée par les réfrigérants primaire et secondaire des parties de conduites dans les différents plans pouvant être commandés.

4. Réservoir thermique selon l'une quelconque des revendications 1 à 3, dans lequel les parties de conduites du système de conduites primaire des plans respectifs et/ou les parties de conduites du système de conduites secondaire sont réalisées de manière hélicoïdale et/ou sinueuse en étant adaptées aux modifications de section transversale de la chambre (14).

5. Réservoir thermique selon la revendication 3 ou 4, dans lequel les parties de conduites des système de conduites primaire et secondaire s'étendent sensiblement les unes contre les autres dans la chambre et le sens d'écoulement du réfrigérant primaire et le sens d'écoulement du réfrigérant secondaire sont réglés de telle sorte que le sens d'écoulement du réfrigérant primaire circule à l'encontre du sens d'écoulement du réfrigérant secondaire.

6. Réservoir thermique selon l'une quelconque des revendications 1 à 5, dans lequel le milieu d'accumulation est un matériau à changement de phase.

7. Réservoir thermique selon la revendication 6, dans lequel le matériau à changement de phase est un mélange d'eau et de sels ou d'alcools avec ou sans autres additifs.

8. Réservoir thermique selon la revendication 7, dans lequel la composition du mélange et/ou la concentration du mélange du matériau à changement de phase peuvent être modifiées et réglées.

9. Réservoir thermique selon l'une quelconque des revendications 1 à 8, dans lequel les modifications de section transversale sont étagées et/ou les parties de conduites du système de conduites primaire ainsi que du système de conduites secondaire s'étendent dans chaque plan ainsi formé.

10. Réservoir thermique selon la revendication 6, **caractérisé en ce que** le réservoir thermique présente une capacité d'accumulation ≥ 4 kWh.
